# EUROPÄISCHE PATENTSCHRIFT

(11) **EP 2 344 788 B1**
(45) Veröffentlichungstag und Bekanntmachung des Hinweises auf die Patenterteilung: **11.07.2012**
(21) Anmeldenummer: 10785321.0
(22) Anmeldetag: 16.06.2010
(51) Int. Cl.: F16J 15/32

(54) **DICHTUNGSANORDNUNG FÜR EINE WELLE**
SEALING ARRANGEMENT FOR A SHAFT
DISPOSITIF D'ÉTANCHÉITÉ POUR ARBRE

(30) Priorität: 22.06.2009 DE 102009030064
(43) Veröffentlichungstag der Anmeldung: 20.07.2011
(73) Patentinhaber: Aerodyn Engineering GmbH, 24768 Rendsburg (DE)
(72) Erfinder: SIEGFRIEDSEN, Sönke, 24768 Rendsburg (DE)
(74) Vertreter: Lobemeier, Martin Landolf
(86) Internationale Anmeldenummer: PCT/DE2010/000673
(87) Internationale Veröffentlichungsnummer: WO 2010/149131

(56) Entgegenhaltungen:
- DE-A1- 4 127 074
- US-A- 3 773 336
- US-A- 5 820 132

## Beschreibung

Die Erfindung betrifft eine Dichtungsanordnung mit einem Gehäusebauteil, einer vom Gehäusebauteil wenigstens teilweise aufgenommenen Welle und einer Mehrzahl von entlang der Längsachse der Welle verschiebbaren Dichtelementen zum Abdichten des Zwischenraums zwischen Gehäusebauteil und Welle. Eine solche Dichtungsanordnung ist aus der US 3773336A bekannt.

Dichtungen sind aus einer Vielzahl von Anwendungsfällen bekannt. Insbesondere bei Räumen, die drehbare Teile, z.B. Schiffswellen oder Rotorwellen von Windenerigeanlagen, aufnehmen, ist eine effiziente Abdichtung von großer Wichtigkeit, um eine optimale Schmierung der Lager zu gewährleisten, insbesondere ein Austreten von Schmierstoff und ein Eindringen von Schmutz zu verhindern.

Bekannt ist auch, dass diese Dichtungen aufgrund der permanenten mechanischen Belastung durch die rotierende Welle einem hohen Verschleiß unterliegen und daher in bestimmten Zeitabständen ausgetauscht werden müssen. Um einen allzu häufigen Austausch der Dichtungen zu vermeiden, der mit dem Stillstand der die Dichtungen enthaltenden Anlage gleichzusetzen und nur unter hohem Aufwand durchzuführen ist, sind häufig mehrere Dichtungen vorgesehen, sodass bei Beschädigung einer ersten Dichtung durch Verschleiß eine weitere zweite Dichtung die Dichtungsfunktion übernehmen kann.

Alternativ kann auch vorgesehen sein, dass jeder Dichtung eine zweite Reservedichtung zugeordnet ist, die nicht im Eingriff mit der rotierenden Welle für den Bedarfsfall vorgehalten und automatisch im Bedarfsfall zusätzlich an die rotierende Welle angelegt wird.

Eine derartige Lösung schlägt beispielsweise die DE 601 12 067 T2 vor, bei der mehrere Dichtungselemente hintereinander angeordnet werden, wobei zunächst nur ein einziges erstes Dichtelement der rotierenden Welle anliegt. Die übrigen auf Vorrat gehaltenen Dichtelemente sind dabei von der rotierenden Welle durch eine Trennwand getrennt, die zurückgefahren werden kann, sodass die dem ersten Dichtelement benachbarten Dichtelemente sukzessive bei Bedarf freigegeben werden. Ist also das erste Dichtelement derart verschleißt, dass seine Dichtfunktion nicht mehr gewährleistet ist, wird das diesem benachbarte Dichtelement freigegeben, sodass beide Dichtelemente der rotierenden Welle anliegen, wobei allerdings nur das neu hinzugekommene Dichtelement die Dichtfunktion ausüben können.

Nachteilig hieran ist allerdings, dass die auf Vorrat gehaltenen Dichtelemente permanent unter Spannung stehen, sodass zu befürchten ist, dass die Dichtwirkung der vorgehaltenen Elemente mit der Zeit gemindert wird und im Bedarfsfall nicht mehr vollständig ausgeübt werden kann.

Ein ähnliches Prinzip geht auch aus der DE 2 028 427 A hervor, aus der bekannt ist, ein nicht in Arbeitslage angeordnetes Dichtelement als Reserve vorzuhalten, das durch eine Relativbewegung entlang der Achse der rotierenden Welle mit dieser in Kontakt, d.h. in die Arbeitslage, gebracht wird - allerdings ohne dass das als Reserve vorgehaltene Dichtelement zuvor einer Trennwand anliegt.

Alternativ kann eine der Welle aufsitzende Buchse derart ausgebildet sein, dass Vertiefungen auf der Oberfläche der Buchse vorgesehen sind, die die Reservedichtelemente berührungslos aufnehmen. Erfolgt eine Relativbewegung zwischen Dichtelement und Buchse, verlässt das Dichtelement die Vertiefung und wird unter Inkontaktbringen mit der Buchse etwas angehoben, sodass dieses seine Dichtfunktion ausüben kann. Gleichzeitig wird das vorher verwendete Dichtelement von einer weiteren Vertiefung der Buchse berührungslos aufgenommen und hat keinen Einfluss auf die Dichtigkeit mehr - es findet also ein Austausch eines defekten Dichtelements gegen ein unbenutztes Reserve-Dichtelement statt.

Nachteilig an diesen Ausgestaltungen ist jedoch, dass das erste und das diesem als Reserve folgende Dichtelement an derselben Stelle der Welle dichtend anliegt. Erfolgt ein Verschleiß der Dichtung nicht nur am Dichtelement sondern auch an der Welle, sind die Dichtungseigenschaften der Dichtung trotz eines voll funktionsfähigen Dichtelements ungenügend, wenn das Reservedichtelement an derselben Stelle anliegt wie das vorherige (vermeintlich) verschlissene Dichtelement. Darüberhinaus sind diese Dichtungsanordnungen mechanisch aufwändig und nehmen relativ viel Platz in Anspruch.

Aufgabe der Erfindung ist es deshalb, eine platzsparende, einfach herzustellende und effiziente Dichtungsanordnung zu schaffen.

Die Aufgabe wird durch die Dichtungsanordnung mit den Merkmalen von Anspruch 1 gelöst. Die Unteransprüche geben vorteilhafte Ausgestaltungen der Erfindung wieder.

Grundgedanke der Erfindung ist es, die Welle derart auszugestalten, dass der Durchmesser entlang eines Achsabschnitts der Welle stufenartig vermindert wird, wobei die Anzahl der Stufen bevorzugt der Anzahl an Dichtelementen entspricht. Die Dichtelemente sind dabei zu den Stufen derart angeordnet, dass durch axiales Verschieben der Dichtelemente in eine Mehrzahl von Positionen jeweils weitere Dichtelemente abdichtend auf jeweils einer weiteren Stufe zu liegen kommen, wobei die weiteren Dichtelemente zusätzlich, wenigstens zum vorhergehenden Dichtelement, der jeweils weiteren Stufe anliegen.

Vorteil der Erfindung ist insbesondere, dass kein Dichtelement an einer von einem anderen Dichtelement zuvor benutzten Position zu liegen kommen kann, da jedes Dichtelement seiner eigenen Stufe zugeordnet ist; zusätzlich wird auch die Position jedes Dichtelements auf seiner Stufe bei relativer Bewegung verändert. Dadurch wird wirkungsvoll verhindert, dass an der Welle auftretende Verschleißerscheinungen die Dichtfunktion der Dichtelemente beeinflussen können.

Die Erfindung wird von in den Zeichnungen dargestellten, besonders bevorzugt ausgestalteten Ausführungsbeispielen näher erläutert. Es zeigen:
- Fig. 1: das Gehäusebauteil der erfindungsgemäß ausgestalteten Dichtungsanordnung nach einem besonders bevorzugten Ausführungsbeispiel in einer Frontalansicht (a), einer geschnittenen Ansicht entlang der Linie A-A (b) und eine geschnittene Detailansicht entlang der Linie B-B (c);
- Fig. 2: eine perspektivische Ansicht des Gehäusebauteils aus Fig. 1;
- Fig.3: eine geschnittene Detailansicht der Dichtungsanordnung nach der Erfindung in vier verschiedenen Dichtungspositionen;
- Fig.4: eine geschnittene Detailansicht der Dichtungsanordnung nach einer besonders bevorzugten Ausgestaltung der Erfindung; und
- Fig. 5: verschiedene vorteilhafte Ausgestaltungen der Welle nach der Erfindung.

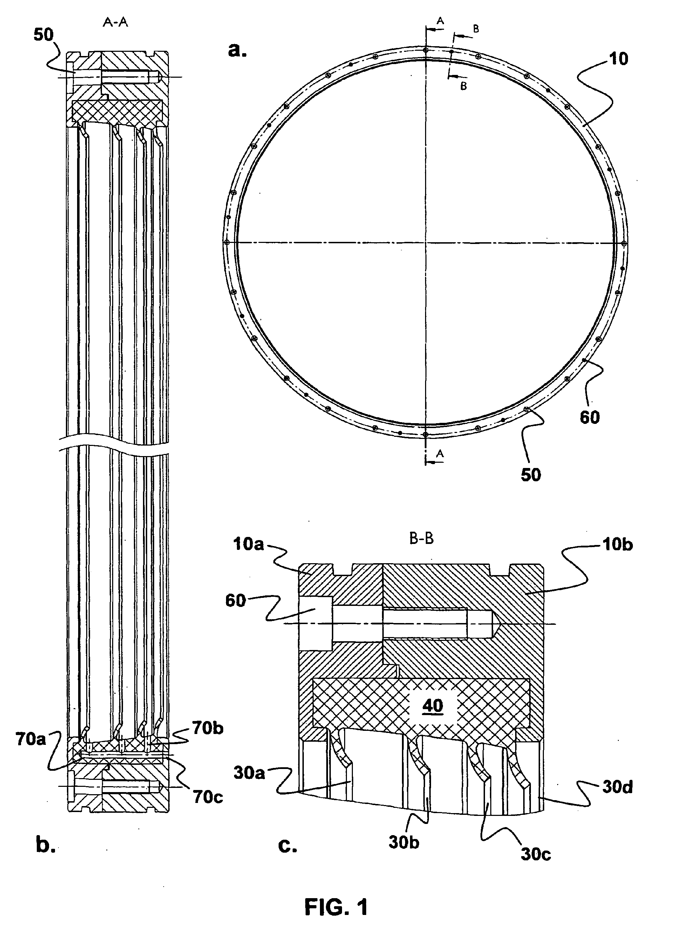

Fig. 1 zeigt das Gehäusebauteil der erfindungsgemäß ausgestalteten Dichtungsanordnung nach einem besonders bevorzugten Ausführungsbeispiel in drei Ansichten, nämlich einer Frontalansicht (Fig. 1a), einer geschnittenen Ansicht entlang der Linie A-A (Fig. 1b) und eine geschnittene Detailansicht entlang der Linie B-B (Fig. 1c).

Wie in Fig. 1 gezeigt ist das Gehäusebauteil 10 als Ring ausgestaltet, der auf seiner Innenseite eine Mehrzahl von Dichtelementen 30a, 30b, 30c, 30d aufnimmt. Die als Dichtlippen ausgebildeten Dichtelemente 30a, 30b, 30c, 30d sind mit einem gemeinsamen Träger 40 verbunden, wobei Dichtelemente 30a, 30b, 30c, 30d und Träger 40 - wie im Beispiel gezeigt - einstückig ausgebildet sind.

Die Dichtelemente 30a, 30b, 30c, 30d können beispielsweise aus Polytetrafluorethylen (PTFE) oder Polyurethan (PUR) gefertigt sein. Da diese Kunststoffe einen großen Wärmeausdehungskoeffizienten aufweisen, kann es notwendig sein, weitere konstruktive Maßnahmen zu ergreifen, um eine Wärmeverformung der Dichtelemente 30a, 30b, 30c, 30d bzw. des Trägers 40 zu vermeiden.

Das ringförmige Gehäusebauteil 10 ist bevorzugt aus zwei oder mehr lösbar mittels einer Mehrzahl von Befestigungsmitteln 50 verbundenen Ringen 10a, 10b gebildet, die eine Aufnahme für den Träger 40 bilden und diesen im Gehäusebauteil 10 so fixieren, dass die Wärmeverformung des bevorzugt ebenfalls aus Kunststoff gefertigten Trägers 40 sowie der Dichtelemente 30a, 30b, 30c, 30d eingeschränkt wird.

Wie in Fig. 1b gezeigt, sind zwischen den Dichtelementen 30a, 30b, 30c, 30d Kanäle 70a, 70b, 70c zum Zu- und Abführen von Schmierstoff vorgesehen. Insbesondere ist in Fig. 1b auf der Unterseite der Dichtungsanordnung zu sehen, dass bevorzugt Kanäle 70b zwischen den Dichtelementen 30a, 30b, 30c, 30d vorgesehen sind, die in einem einzigen im Träger 40 vorgesehenen Kanal 70a münden, der mit einem weiteren im Gehäusebauteil vorgesehenen Kanal 70c kommuniziert. Aufgabe dieses Kanalsystems 70a, 70b, 70c ist es, das auf der Oberseite der Dichtungsanordnung durch ein entsprechendes Kanalsystem zwischen den Dichtelementen 30a, 30b, 30c, 30d der Welle 20 zugeführtes Schmieröl abzuleiten und durch das Zusammenspiel der Kanalsysteme für eine gleichmäßige Verteilung des Schmieröls zu sorgen, damit die Dichtelemente 30a, 30b, 30c, 30d nicht trockenlaufen.

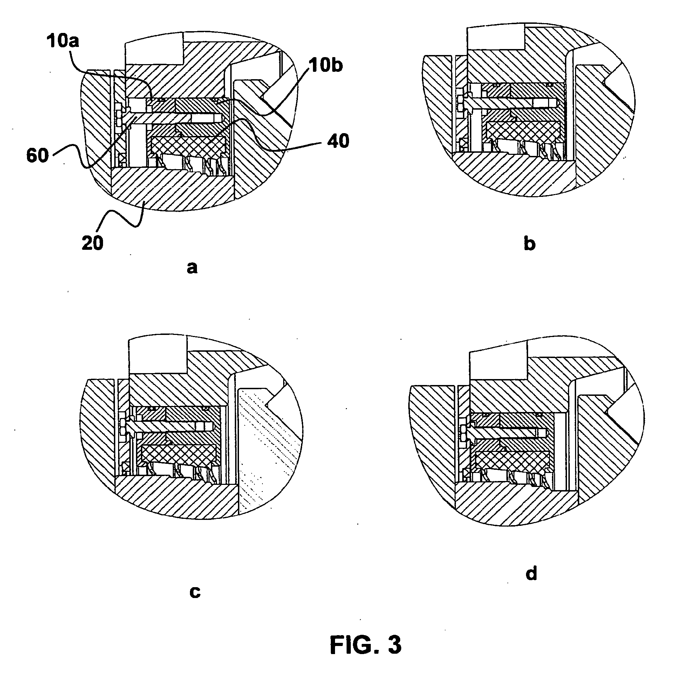

Darüber hinaus weist das Gehäusebauteil 10 eine Mehrzahl von Positionierungsmitteln 60 auf, um das Gehäusebauteil 10 in einem Gehäuse in axialer Richtung zu positionieren. Die sich parallel zur Achse der (in Fig. 3 dargestellten) Welle 20 erstreckenden Positionierungsmittel 60 dienen jedoch nicht allein dazu, das Gehäusebauteil 10 in seiner Lage im Gehäuse einzurichten, sondern insbesondere die Dichtelemente 30a, 30b, 30c, 30d in ihrer Position an der Welle 20 zu verschieben. Hierfür sind die Positionierungsmittel 60 bevorzugt als Gewindebohrungen ausgebildet, in die mit den Gewindebohrungen schraubende Schrauben eingesetzt werden können, die sich an einem am Gehäuse vorgesehenen Stützelement abstützen und so eine relative Bewegung zwischen Gehäusebauteil 10 und Welle 20 bewirken können. Bevorzugt sind die Schrauben für das Wartungspersonal ohne weiteres von der Außenseite des Gehäuses frei zugänglich, sodass eine Positionierung der Dichtelemente 30a, 30b, 30c, 30d an der Welle 20 während Reparaturarbeiten an der Anlage erfolgen kann.

Insbesondere ist ein mit einer Überwachungsvorrichtung verbundener Leckagesensor, also ein Sensor, der durch die Dichtung aus dem Lager austretendes Schmieröl erfasst, sinnvoll, wobei das austretende Schmieröl über eine Leckageleitung in den Tank zurückgeführt werden kann. Vorteilhaft ist es auch bei Austritt von Schmieröl eine Alarmmeldung auszugeben, wobei z.B. je nach Menge austretendem Öl (pro Zeiteinheit) lediglich ein Hinweis auf eine Leckage ohne Dringlichkeit einer Wartung oder bei Austreten einer einen vorbestimmten Grenzwert übersteigenden Menge Öl ein Alarm mit der Notwendigkeit, die Dichtungsanordnung beispielsweise durch Wartungspersonal neu zu justieren, ausgegeben werden kann.

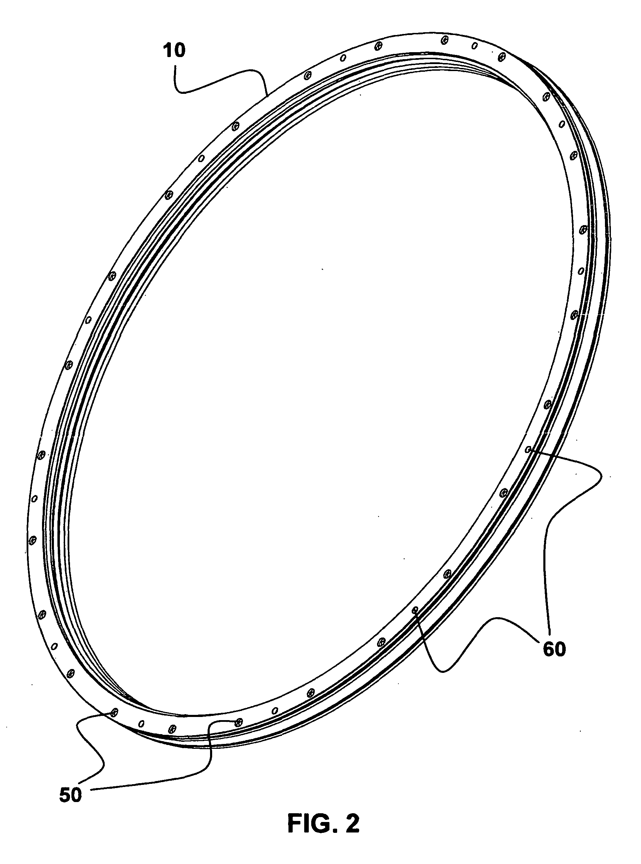

Der zuvor erwähnte Aufbau des Gehäusebauteils 10 ermöglicht - wie Fig. 2 in perspektivischer Ansicht zeigt - einen äußerst kompakten und relativ einfach herzustellenden Aufbau.

Fig. 3 zeigt schließlich eine geschnittene Detailansicht der Dichtungsanordnung nach der Erfindung in vier verschiedenen Dichtungspositionen, in denen zunächst nur ein Dichtelement 30a an der Welle 20 anliegt (Fig. 3a), zwei Dichtelemente 30a, 30b an der Welle 20 anliegen (Fig. 3b), drei Dichtelemente 30a, 30b, 30c an der Welle 20 anliegen (Fig. 3c) und schließlich alle vier Dichtelemente 30a, 30b, 30c, 30d an der Welle 20 anliegen.

Im gezeigten Beispiel weist die Welle 20 im Bereich der Dichtelemente 30a, 30b, 30c, 30d einen (in der Zeichenebene von rechts nach links verlaufenden) Abschnitt mit sich stufenweise vergrößerndem Wellendurchmesser auf.

Im Ausgangszustand liegt nur das erste Dichtelement 30a auf der obersten Stufe der stufenweise verbreiterten Welle 20 an (Fig. 1a). Die übrigen Dichtelemente 30b, 30c, 30d sind dabei über der rotierenden Welle 20 gelagert, ohne dass diese mit der Welle 20 in Berührung kommen.

Durch Betätigen der Mehrzahl von Positionierungsmitteln 60 (hier gezeigt als eine mit einer ein Innengewinde aufweisenden Bohrung schraubenden Schraube) kann das Gehäusebauteil 10 parallel zur Längsachse der Welle 20 relativ verschoben werden, bis das dem ersten Dichtelement 30a benachbarte Dichtelement 30b auf seiner Stufe aufliegt.

Durch weiteres Betätigen der Positionierungsmittel 60 kann auch das weitere Dichtmittel 30c und das letzte Dichtmittel 30d auf die jeweils für diese vorgesehenen Stufen geschoben werden, sodass alle im Beispiel gezeigten Dichtmittel 30a, 30b, 30c, 30d der Welle 20 anliegen.

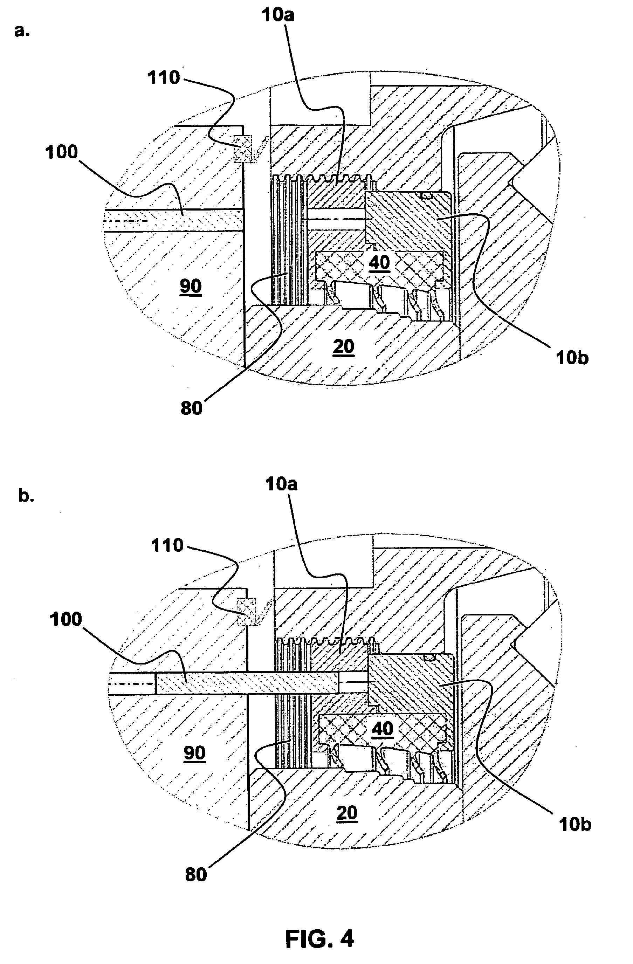

Eine besonders vorteilhafte Ausgestaltung der Erfindung kann erreicht werden, wenn - wie in Fig. 4 gezeigt - das (ringförmige) Gehäusebauteil 10 ein Außengewinde aufweist, das mit einem an einem weiteren Gehäusebauteil vorgesehenen Innengewinde schraubt. Zum Verschieben der Dichtungsanordnung in axialer Richtung der Welle 20 können bevorzugt am Abtrieb oder am Antrieb, z.B. an der Nabe 90 des Rotors einer Windenergieanlage, bevorzugt hydraulisch verfahrbare Bolzen 100 vorgesehen sein, die aus einer ersten Position (vgl. Fig. 4a) in die als einfache Bohrungen ausgebildeten Positioneriungsmittel 60 eingefahren werden können (siehe Fig. 4b), sodass sich das Gehäusebauteil 10 bei Drehung des An- oder Abtriebs mitdreht und entlang der Längsrichtung der Welle 20 verschoben wird.

Das Gewinde ist dabei bevorzugt derart eingerichtet, das die Dichtelemente 30a, 30b, 30c, 30d bei einer Drehung des Gehäusebauteils 10 im Uhrzeigersinn oder gegen den Uhrzeigersinn von einer ersten Position in eine weitere Position verschoben werden, in der wenigstens ein weiteres Dichtelement 30b, 30c, 30d der Welle 20 anliegt.

Insbesondere ist es mit dieser besonders bevorzugten Ausgestaltung auch möglich, das Gehäusebauteil 10 durch Drehen aus dem Gehäuse herauszudrehen und in das Gehäuse einzusetzen und erleichtert daher den genauen Zusammenbau der Bauteile, wobei ein weiteres Dichtelement 110 den zuvor vorgestellten, besonders bevorzugten Mechanismus vor Verunreinigungen schützt.

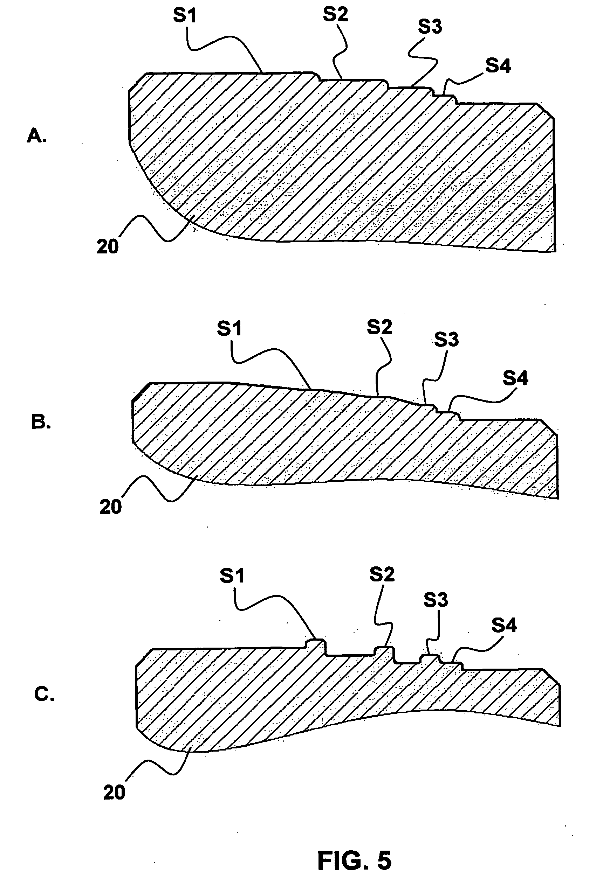

Schließlich zeigt Fig. 5 drei unterschiedlich gemäß der Erfindung ausgebildete Wellen 20. Fig. 5A zeigt einen einfach gestuften Aufbau der Welle 20 mit sich in Längsrichtung der Welle 20 von links nach rechts pro Stufe S1, S2, S3, S4 verjüngendem Wellendurchmesser. Dabei sind die Absätze zwischen den Stufen S1, S2, S3, S4 abgerundet, um ein möglichst sanftes in Kontaktbringen der (in dieser Darstellung nicht abgebildeten) Dichtelemente 30a, 30b, 30c, 30d mit der Welle 20 zu ermöglichen und einer Beschädigung der Dichtelemente durch scharfkantige Absätze vorzubeugen.

Fig. 5B zeigt, dass zumindest die links dargestellten drei Stufen S1, S2, S3 in einem Teilbereich konisch ausgebildet sind. Insbesondere befindet sich der konische Teilbereich der Stufen S1, S2, S3 in dem in Bewegungsrichtung der Dichtelemente 30a, 30b, 30c, 30d liegenden Bereich der Stufe S1, S2, S3, sodass bei Verschieben der Dichtelemente 30a, 30b 30c, 30d das jeweilige Dichtelement 30a, 30b, 30c auf den konischen Bereich der Stufe S1, S2, S3 geschoben und unter Spannung gesetzt wird. So erreicht werden, dass auch leicht verschlissene Dichtelemente 30a, 30b, 30c durch leichten Andruck an die Welle 20 weiterhin eine Dichtfunktion ausüben können. Die letzte Stufe S4 hingegen weist bevorzugt keinen konischen Teilbereich auf, da bei Verschleiß des dazugehörenden Dichtelements 30d ein Austausch aller Dichtelemente 30a, 30b, 30c, 30d sinnvoll ist.

Fig. 5C zeigt eine weitere Welle 20 mit als Sockel ausgebildeten Stufen S1, S2, S3. Dabei sind die mit in der Zeichnung von links nach rechts abnehmendem Abstand zur Wellenachse angeordneten Sockel S1, S2, S3 als Laufflächen für die entsprechend zugeordneten Dichtelemente 30a, 30b, 30c ausgebildet. Werden nun die Dichtelemente 30a, 30b, 30c, 30d von in der Zeichnung rechts nach links verschoben, wird beispielsweise das zuerst verwendete (links angeordnete) Dichtelement 30a vom Sockel S1 geschoben, sodass es die Welle 20 nicht mehr berührt und keine Dichtfunktion (mehr) ausübt. Dafür wird aber das auf das erste Dichtelement 30a nächstfolgende Dichtelement 30b durch axiales Verschieben der Dichtelemente 30a, 30b, 30c, 30d auf den nächstfolgenden, tiefer angeordneten Sockel S2 gesetzt. Ist auch dieses Dichtelement 30b verschließen, wird dieses vom Sockel S2 genommen und das nächste Dichtelement 30c mit seinem Sockel S3 in Kontakt gebracht.

Die Sockel S1, S2, S3 können jedoch auch so ausgebildet sein, dass jedes Dichtelement 30a, 30b, 30c für jeweils zwei Zyklen mit dem Sockel S1, S2, S3 in Berührung ist und erst bei einem weiteren Zyklus vom Sockel genommen wird.

Geht man von einer Lebensdauer von vier bis fünf Jahren für ein als Dichtlippe ausgebildetes Dichtelement aus, beträgt die Gesamtlebensdauer der erfindungsgemäßen Dichtungsanordnung maximal ca. 20 Jahre.

## Patentansprüche

1. Dichtungsanordnung mit einem Gehäusebauteil (10), einer vom Gehäusebauteil (10) wenigstens teilweise aufgenommenen Welle (20) und einer Mehrzahl von entlang der Längsachse der Welle (20) verschiebbaren Dichtelementen (30a, 30b, 30c, 30d) zum Abdichten des Zwischenraums zwischen Gehäusebauteil (10) und Welle (20), wobei
die Welle (20) einen sich in Längsrichtung der Welle (20) erstreckenden Abschnitt mit sich stufenartig verjüngendem Wellendurchmesser aufweist,
**dadurch gekennzeichnet, dass**
die Dichtelemente (30a, 30b, 30c, 30d) von einer ersten Position, in der ein erstes Dichtelement (30a) einer ersten Stufe (S1) anliegt, in weitere Positionen verschiebbar sind, in denen zusätzlich wenigstens je ein weiteres Dichtelement (30b, 30c, 30d) je einer weiteren Stufe (S2, S3, S4) anliegt.

2. Dichtungsanordnung nach Anspruch 1, **dadurch gekennzeichnet, dass** die Anzahl der Stufen (S1, S2, S3, S4) der Anzahl der Dichtelemente (30a, 30b, 30c, 30d) entspricht.

3. Dichtungsanordnung nach einem der vorhergehenden Ansprüche, **dadurch gekennzeichnet, dass** die Anzahl der Positionen der Anzahl der Dichtelemente (30a, 30b, 30c, 30d) entspricht.

4. Dichtungsanordnung nach einem der vorhergehenden Ansprüche, **dadurch gekennzeichnet, dass** die Dichtelemente (30a, 30b, 30c, 30d) gemeinsam verschiebbar eingerichtet sind.

5. Dichtungsanordnung nach einem der vorhergehenden Ansprüche, **dadurch gekennzeichnet, dass** wenigstens eine Stufe (S3, S2) wenigstens teilweise konisch ausgebildet ist.

6. Dichtungsanordnung nach einem der vorhergehenden Ansprüche, **dadurch gekennzeichnet, dass** zwischen den Dichtelementen (30a, 30b, 30c, 30d) Schmierstoff zu- und abführende Kanäle (70a, 70b, 70c) vorgesehen sind.

7. Dichtungsanordnung nach einem der vorhergehenden Ansprüche, **dadurch gekennzeichnet, dass** wenigstens einige Stufen (S1, S2, S3) als Sockel ausgebildet sind.

8. Dichtungsanordnung nach einem der vorhergehenden Ansprüche, **dadurch gekennzeichnet, dass** der Abstand zwischen zwei Stufen und der Abstand zwischen zwei benachbarten Dichtelementen (30b-30c, 30c-30d) annähernd der Hälfte des Abstands zwischen den vorhergehenden Stufen bzw. dem vorhergehenden Dichtelementepaar (30a-30b, 30b-30c) entspricht.

9. Dichtungsanordnung nach einem der vorhergehenden Ansprüche, **dadurch gekennzeichnet, dass** die Dichtelemente (30a, 30b, 30c, 30d) mit einem gemeinsamen Träger (40) verbunden sind.

10. Dichtungsanordnung nach einem der vorhergehenden Ansprüche, **dadurch gekennzeichnet, dass** die Dichtelemente (30a, 30b, 30c, 30d) und der Träger (40) einstückig ausgebildet sind.

11. Dichtungsanordnung nach einem der vorhergehenden Ansprüche, **dadurch gekennzeichnet, dass** die Dichtelemente (30a, 30b, 30c, 30d) gleich lang und in Richtung der Durchmesserzunahme der Welle (20) mit abnehmendem Abstand zur Achse der Welle (20) angeordnet sind.

12. Dichtungsanordnung nach einem der vorhergehenden Ansprüche, **dadurch gekennzeichnet, dass** das Gehäusebauteil (10) aus zwei mittels eines Befestigungsmittels (50) lösbar miteinander verbundenen, eine Aufnahme für die Dichtelemente (30a, 30b, 30c, 30d) bildenden Ringen (10a, 10b) gebildet ist.

13. Dichtungsanordnung nach einem der vorhergehenden Ansprüche, **dadurch gekennzeichnet, dass** das Gehäusebauteil (10) Positionierungsmittel.(60) zum Positionieren des Gehäusebauteils (10) in einem Gehäuse aufweist.

14. Dichtungsanordnung nach einem der vorhergehenden Ansprüche, **dadurch gekennzeichnet, dass** das Gehäusebauteil (10) ein Außengewinde aufweist.

## Claims

1. A sealing arrangement, comprising a housing component (10), a shaft (20) at least partially accommodated by the housing component (10), and a plurality of sealing elements (30a, 30b, 30c, 30d), which can be moved along the longitudinal axis or the shaft (20), for sealing the intermediate space between the housing component (10) and the shaft,
wherein the shaft (20) comprises a section that extends in the longitudinal direction of the shaft (20) and has a shaft diameter that is tapered in steps,
**characterized in that**
the sealing elements (30a, 30b, 30c, 30d) can be moved from a first position, in which a first sealing element (30a) lies against a first step (S1), to further positions, in which additionally at least one further sealing element (30b, 30c, 30d) lies against in each case one further step (S2, S3, S4).

2. The sealing arrangement according to Claim 1, **characterized in that** the number of steps (S1, S2, S3, S4) corresponds to the number of the sealing elements (30a, 30b, 30c, 30d).

3. The sealing arrangement according to one of the preceding claims, **characterized in that** the number of positions corresponds to the number of sealing elements (30a, 30b, 30c, 30d).

4. The sealing arrangement according to one of the preceding claims, **characterized in that** the sealing elements (30a, 30b, 30c, 30d) are arranged such that they can be moved together.

5. The sealing arrangement according to one of the preceding claims, **characterized in that** at least one step (S3, S2) is at least partly of conic design.

6. The sealing arrangement according to one of the preceding claims, **characterized in that** channels (70a, 70b, 70c) feeding and discharging a lubricant are provided between the sealing elements (30a, 30b, 30c, 30d).

7. The sealing arrangement according to one of the preceding claims, **characterized in that** at least some steps (S1, S2, S3) are designed as a pedestal.

8. The sealing arrangement according to one of the preceding claims, **characterized in that** the distance between two steps and the distance between two neighbouring sealing elements (30b-30c, 30c-30d) approximately corresponds to half the distance between the preceding steps or the preceding pair of sealing elements (30a-30b, 30b-30c).

9. The sealing arrangement according to one of the preceding claims, **characterized in that** the sealing elements (30a, 30b, 30c, 30d) are connected to a common carrier (40).

10. The sealing arrangement according to one of the preceding claims, **characterized in that** the sealing elements (30a, 30b, 30c, 30d) and the carrier (40) are of integral design.

11. The sealing arrangement according to one of the preceding claims, **characterized in that** the sealing elements (30a, 30b, 30c, 30d) are of equal lengths and are arranged in the direction of the increase in diameter of the shaft (20) with a diminishing distance from the axis of the shaft (20).

12. The sealing arrangement according to one of the preceding claims, **characterized in that** the housing component (10) is formed from two rings (10a, 10b) that are releasably connected to each other by means of fastenings means (50) and form a receptacle for the sealing elements (30a, 30b, 30c, 30d).

13. The sealing arrangement according to one of the preceding claims, **characterized in that** the housing component (10) has positioning means (60) for positioning the housing component (10) in a housing.

14. The sealing arrangement according to one of the preceding claims, **characterized in that** the housing component (10) has an external thread.

## Revendications

1. Dispositif d'étanchéité avec un élément de boîtier (10), un arbre (20), logeant au moins partiellement dans un élément de boîtier (10) et une multiplicité d'éléments d'étanchéité (30a, 30b, 30c, 30d), déplaçables le long de l'axe longitudinal de l'arbre (20), pour étancher l'espace entre l'élément de boîtier (10) et l'arbre (20),
où l'arbre (20) présente une section, s'étendant dans le sens de la longueur de l'arbre (20) avec un diamètre de l'arbre qui diminue par paliers,
**caractérisé en ce que**
les éléments d'étanchéité (30a, 30b, 30c, 30d) sont déplaçables d'une première position, dans laquelle un premier élément d'étanchéité (30a) est ajusté à un premier palier (S1), dans d'autres positions, dans lesquelles est ajusté en plus au moins respectivement un autre élément d'étanchéité (30b, 30c, 30d) à respectivement un autre palier (S2, S3, S4).

2. Dispositif d'étanchéité d'après revendication 1, **caractérisé en ce que** le nombre de paliers (S1, S2, S3, S4) correspond au nombre des éléments d'étanchéité (30a, 30b, 30c, 30d).

3. Dispositif d'étanchéité d'après l'une des revendications précédentes, **caractérisé en ce que** le nombre de positions correspond au nombre des éléments d'étanchéité (30a, 30b, 30c, 30d).

4. Dispositif d'étanchéité d'après l'une des revendications précédentes, **caractérisé en ce que** les éléments d'étanchéité (30a, 30b, 30c, 30d) sont conçus à être déplaçables ensemble.

5. Dispositif d'étanchéité d'après l'une des revendications précédentes, **caractérisé en ce qu'**au moins un palier (S3, S2) est formé au moins en partie coniquement.

6. Dispositif d'étanchéité d'après l'une des revendications précédentes, **caractérisé en ce qu'**entre les éléments d'étanchéité (30a, 30b, 30c, 30d) soient prévus des canaux d'alimentation et d'évacuation de lubrifiant (70a, 70b, 70c).

7. Dispositif d'étanchéité d'après l'une des revendications précédentes, **caractérisé en ce qu'**au moins quelques paliers (S1, S2, S3) sont formés comme socle.

8. Dispositif d'étanchéité d'après l'une des revendications précédentes, **caractérisé en ce que** la distance entre deux paliers et la distance entre les deux éléments d'étanchéité avoisinants (30b-30c, 30c-30d) correspond approximativement à la moitié de la distance entre les paliers précédents ou respectivement les éléments d'étanchéité précédents (30a-30b, 30b-30c).

9. Dispositif d'étanchéité d'après l'une des revendications précédentes, **caractérisé en ce que** les éléments d'étanchéité (30a, 30b, 30c, 30d) sont reliés à un support commun (40).

10. Dispositif d'étanchéité d'après l'une des revendications précédentes, **caractérisé en ce que** les éléments d'étanchéité (30a, 30b, 30c, 30d) et le support (40) sont formés en monobloc.

11. Dispositif d'étanchéité d'après l'une des revendications précédentes, **caractérisé en ce que** les éléments d'étanchéité (30a, 30b, 30c, 30d) sont de la même longueur et disposés dans le sens de l'augmentation du diamètre de l'arbre (20) avec une distance décroissante par rapport à l'axe de l'arbre (20).

12. Dispositif d'étanchéité d'après l'une des revendications précédentes, **caractérisé en ce que** l'élément de boîtier (10) est formé de deux bagues (10a, 10b), reliées entre elles de manière détachable au moyen d'un moyen de fixation (50), bagues qui forment un logement pour les éléments d'étanchéité (30a, 30b, 30c, 30d).

13. Dispositif d'étanchéité d'après l'une des revendications précédentes, **caractérisé en ce que** l'élément de boîtier (10) présente des moyens de positionnement (60) pour la mise en position de l'élément de boîtier (10) dans un boîtier.

14. Dispositif d'étanchéité d'après l'une des revendications précédentes, **caractérisé en ce que** l'élément de boîtier (10) présente un filet extérieur.
